# EUROPÄISCHE PATENTSCHRIFT

(11) **EP 2 411 275 B1**
(45) Veröffentlichungstag und Bekanntmachung des Hinweises auf die Patenterteilung: **06.03.2013**
(21) Anmeldenummer: 10709481.5
(22) Anmeldetag: 12.03.2010
(51) Int. Cl.: B64D 11/06, G06Q 10/06

(54) **REKONFIGURATION VON KABINENLAYOUTS**
RECONFIGURATION OF CABIN LAYOUTS
RECONFIGURATION D'AGENCEMENTS DE CABINES

(30) Priorität: 24.03.2009 DE 102009014606; 24.03.2009 US 162788 P
(43) Veröffentlichungstag der Anmeldung: 01.02.2012
(73) Patentinhaber: Airbus Operations GmbH, 21129 Hamburg (DE)
(72) Erfinder: SCHLIWA, Ralf, 21739 Dollern (DE); MAYER, Tobias, 20146 Hamburg (DE)
(74) Vertreter: Kopf, Korbinian Paul
(86) Internationale Anmeldenummer: PCT/EP2010/053163
(87) Internationale Veröffentlichungsnummer: WO 2010/108793

(56) Entgegenhaltungen:
- EP-A1- 1 452 444
- WO-A1-03/074357
- DE-A1-102007 052 598
- JP-A- 2 279 433
- US-A1- 2006 032 979

## Beschreibung

Die vorliegende Anmeldung beansprucht die Priorität der deutschen Patentanmeldung 10 2009 014 606.7 eingereicht am 24. März 2009 und der US-Provisional Application 61/162,788, eingereicht am 24. März 2009.

### Gebiet der Erfindung

Die Erfindung betrifft die Rekonfiguration von Kabinen eines Transportmittels. Insbesondere betrifft die Erfindung ein teilautomatisiertes Verfahren zur Rekonfiguration eines Kabinenlayouts einer Passagierkabine eines Transportmittels gemäβ Anspruch 1 Steuerungs- und Kontrollsystem zur zumindest teilweise automatisierten Rekonfiguration eines Kabinenlayouts gemäβ Anspruch 14, sowie ein Luftfahrzeug.

### Technologischer Hintergrund

Die Rekonfiguration von Passagiersitzen in einem Luftfahrzeug oder anderen Transportmitteln ist verhältnismäßig aufwändig, da Flugzeuge dafür nicht speziell vorbereitet sind. Die Positionierung der Sitze, die Anpassung von Sitz-zu-Sitzverkabelung, Versorgungskanal und Programmierung des Kabinenmanagementsystems sind umfangreich manuelle Tätigkeiten, die eine effiziente Umrüstung während dem Betrieb ("In Service") verhindern.

DE 10 2007 052 598 A1, welches als nächstliegender Stand des Technik betrachtet wird, beschreibt ein automatisiertes Verfahren zur Rekonfiguration von Passagieritzen.

DE 103 07 870 A1 und US 2004/0195450 A1 beschreiben Sitzreihenanordnungen in einer Passagierkabine eines Verkehrsflugzeuges. Es sind Sitzreihen mit Passagiersitzen mit hochklappbarem Sitzteilen vorgesehen, um die Breite eines Quergangs bedarfsweise erhöhen zu können. Auf diese Weise ist eine Erhöhung der Sitzplatzkapazität möglich, da die Quergänge der Notausgänge enger ausgeführt sein können.

Soll nun das Kabinenlayout grundsätzlich geändert werden, sind umfangreiche Umbaumaßnahmen erforderlich, die oft nur von geschultem Personal und unter Zuhilfenahme entsprechender Werkzeuge durchgeführt werden können.

### Zusammenfassung der Erfindung

Es ist eine Aufgabe der Erfindung, ein Verfahren und ein System zur vereinfachten Rekonfiguration eines Kabinenlayouts in einem Transportmittel bereitzustellen.

Es sind ein teilautomatisiertes Verfahren zur Rekonfiguration eines Kabinenlayouts einer Passagierkabine eines Transportmittels, ein Steuerungs- und Kontrollsystem zur zumindest teilweise automatisierten Rekonfiguration eines Kabinenlayouts einer Passagierkabine eines Transportmittels, ein Luftfahrzeug mit einem derartigen Steuerungs- und Kontrollsystem gemäß den Merkmalen der unabhängigen Ansprüche angegeben. Weiterbildungen der Erfindung ergeben sich aus den Unteransprüchen.

Die beschriebenen Ausführungsbeispiele betreffen gleichermaßen das Verfahren, das Steuerungs- und Kontrollsystem sowie das Luftfahrzeug. In anderen Worten lassen sich die im Folgenden im Hinblick auf das Verfahren beschriebenen Schritte auch in Form von entsprechenden Vorrichtungen in dem Steuerungs- und Kontrollsystem in dem Luftfahrzeug implementieren. Ebenso lassen sich Merkmale der im Folgenden beschriebenen Vorrichtungen auch in Form von Verfahrensschritten implementieren.

Gemäß einem Ausführungsbeispiel der Erfindung ist ein teilautomatisiertes Verfahren zur Rekonfiguration eines Kabinenlayouts einer Passagierkabine eines Transportmittels angegeben, bei dem elektronische Daten hinsichtlich eines geplanten Kabinenlayouts an eine Recheneinheit des Transportmittels bereitgestellt werden, ein erster durchzuführender Arbeitsschritt der Rekonfiguration an ein Besatzungsmitglied des Transportmittels automatisch mitgeteilt wird, der erste Arbeitsschritt durch das Besatzungsmitglied durchgeführt wird und (danach) ein zweiter durchzuführender Arbeitsschritt der Rekonfiguration an das Besatzungsmitglied automatisch mitgeteilt wird.

Wenn hier und im Folgenden von Transportmitteln die Rede ist, so ist darunter beispielsweise ein Luftfahrzeug, wie Helikopter, Zeppelin oder Flugzeug, zu verstehen oder aber auch ein Wasserfahrzeug, Schienenfahrzeug oder Landfahrzeug.

Auf diese Weise können die ursprünglich manuell durchzuführenden Tätigkeiten vereinfacht und zum Teil automatisiert werden. Der Einsatz von geschultem Personal ist nicht mehr zwingend notwendig. Aufgrund der automatischen Mitteilung an das entsprechende Besatzungsmitglied (beispielsweise in Form von akustischen und/oder optischen Signalen) muss das Besatzungsmitglied keine Pläne verwenden, auf denen das entsprechende Kabinenlayout abgedruckt ist. Vielmehr wird das geplante Kabinenlayout an die Recheneinheit übermittelt und das Rekonfigurationsverfahren wird daraufhin von der Recheneinheit geleitet, teilweise gesteuert und überwacht.

Gemäß einem weiteren Ausführungsbeispiel der Erfindung werden die Daten hinsichtlich des geplanten Kabinenlayouts für die Bereitstellung von einem terrestrischen Sender an einen Speicher der Recheneinheit übermittelt. Die Übermittlung kann beispielsweise kabellos mittels einer geeigneten Funkübertragungstechnik oder aber auch kabelgebunden erfolgen.

Im Falle einer kabellosen Übermittlung werden die Daten beispielsweise verschlüsselt, so dass die Gefahr eines Datenmissbrauchs reduziert werden kann.

Gemäß einem weiteren Ausführungsbeispiel der Erfindung erfolgt das Mitteilen des ersten und des zweiten durchzuführenden Arbeitsschritts zumindest teilweise optisch.

Gemäß einem weiteren Ausführungsbeispiel der Erfindung handelt es sich bei dem optischen Signal um ein Signal im Bereich eines als nächstes zu verschiebenden Sitzes.

Beispielsweise sind über, neben oder an den Sitzen entsprechende Leuchten angebracht. Die Leuchte beim als nächstes zu verschiebenden Sitz blinkt auf, wenn dieser Sitz an der Reihe ist, verschoben zu werden. Ebenso blinkt ein Stopsignal, wenn sich der Sitz in der gewünschten Position befindet.

Auf diese Weise muss das Besatzungsmitglied nur den Lichtsignalen folgen, um das Kabinenlayout zu verändern.

Gemäß einem weiteren Ausführungsbeispiel der Erfindung handelt es sich bei dem optischen Signal um ein projiziertes Signal von einem Projektor. So ist es beispielsweise möglich, nur eine geringfügige Zahl an Projektoren anzubringen, die schwenkbar ausgeführt sind und von der Recheneinheit gesteuert die Start- und Endpositionen für die entsprechenden Sitze an die Decke oder an die Wand projizieren.

Auch ist es möglich, dass beispielsweise an den Überkopfgepäckablagefächern ein OLED-Streifen angebracht ist, auf dem die Positionen der als nächstes zu verschiebenden Sitze angezeigt werden.

Gemäß einem weiteren Ausführungsbeispiel der Erfindung umfasst der erste Arbeitsschritt ein Verschieben eines Sitzes, wobei vor dem Verschieben des Sitzes eine elektrische Entriegelung des Sitzes erfolgt und wobei nach dem Verschieben des Sitzes eine elektrische Verriegelung des Sitzes erfolgt.

Gemäß einem weiteren Ausführungsbeispiel der Erfindung erfolgen die Entriegelung und die Verriegelung des Sitzes automatisch.

Beispielsweise wird dem Besatzungsmitglied die Position des als nächstes zu verschiebenden Sitzes über ein entsprechendes Leuchtzeichen über dem Sitz angezeigt. Gleichzeitig wird der Sitz automatisch entriegelt. Das Besatzungsmitglied schiebt nun den Sitz in die gewünschte Endposition, woraufhin ein Stoppsignal ertönt oder angezeigt wird. Daraufhin wird der Sitz wieder automatisch verriegelt.

Gemäß einem weiteren Ausführungsbeispiel der Erfindung erfolgt die Entriegelung und die Verriegelung des Sitzes mit Hilfe eines Verriegelungsmechanismus, der mit einem Memorymetall-Element von einer Verriegelungsposition in eine Entriegelungsposition bewegt wird (und umgekehrt).

Ein solches Memorymetall-Element kann durch das Anlegen einer elektrischen Spannung verbogen werden, so dass der Verriegelungsmechanismus ausgelöst wird. Wird die Spannung ausgeschaltet, wird der Verriegelungsmechanismus wieder (diesmal in umgekehrter Richtung) ausgelöst.

Gemäß einem weiteren Ausführungsbeispiel der Erfindung erfolgt außerdem ein automatisches Überprüfen, ob der erste Arbeitsschritt fehlerfrei ausgeführt worden ist oder nicht, gefolgt von einer Übermittlung einer entsprechenden Rückmeldung an das Besatzungsmitglied.

Auf diese Weise wird dem Besatzungsmitglied Feedback gegeben, ob sich der entsprechende Sitz bereits an der richtigen Position befindet oder nicht.

Gemäß einem weiteren Ausführungsbeispiel der Erfindung umfasst die Rückmeldung ein akustisches Signal. Außerdem oder alternativ kann die Rückmeldung optisch erfolgen, beispielsweise durch ein entsprechendes Blinkzeichen oder ein Dauerleuchten eines Leuchtzeichens.

Gemäß einem weiteren Ausführungsbeispiel der Erfindung erfolgt außerdem eine automatische Bestimmung einer Position eines Sitzes während einem Verschieben des Sitzes.

Auf diese Weise kann das System automatisch feststellen, wann sich der Sitz an der gewünschten Position befindet, so dass dem Besatzungsmitglied eine entsprechende Rückmeldung gegeben werden kann.

Gemäß einem weiteren Ausführungsbeispiel der Erfindung ist ein Steuerungs- und Kontrollsystem zur zumindest teilweise automatisierten Rekonfiguration eines Kabinenlayouts einer Passagierkabine eines Transportmittels angegeben. Das Steuerungs- und Kontrollsystem weist eine Recheneinheit zur Entgegennahme von elektronischen Daten hinsichtlich eines geplanten Kabinenlayouts auf. Weiterhin ist eine Ausgabevorrichtung vorgesehen. Die Ausgabevorrichtung ist in Kombination mit der Recheneinheit zum automatischen Mitteilen eines ersten durchzuführenden Arbeitsschritts der Rekonfiguration an ein Besatzungsmitglied auf Basis des geplanten Kabinenlayouts ausgeführt. Weiterhin ist die Ausgabevorrichtung in Kombination mit der Recheneinheit zum automatischen Mitteilen eines zweiten durchzuführenden Arbeitsschritts der Rekonfiguration an das Besatzungsmitglied ausgeführt, wenn der erste Arbeitsschritt beendet ist.

Insbesondere können Detektionsvorrichtungen bzw. Positionsbestimmungsvorrichtungen in Form einer geeigneten Sensorik vorgesehen sein, um zu bestimmen, ob sich der Sitz in der gewünschten Position befindet oder nicht.

Gemäß einem weiteren Ausführungsbeispiel der Erfindung ist ein Luftfahrzeug mit einem oben und im Folgenden beschriebenen Steuerungs- und Kontrollsystem angegeben.

Im Folgenden werden mit Verweis auf die Figuren Ausführungsbeispiele der Erfindung beschrieben.

### Kurze Beschreibung der Figuren

Fig. 1 zeigt ein Steuerungs- und Kontrollsystem gemäß einem Ausführungsbeispiel der Erfindung.
Fig. 2 zeigt eine Prinzipdarstellung eines Steuerungs- und Kontrollsystems gemäß einem Ausführungsbeispiel der Erfindung.
Fig. 3 zeigt einen ersten Verfahrensschritt gemäß einem Ausführungsbeispiel der Erfindung.
Fig. 4 zeigt einen zweiten Verfahrensschritt gemäß einem Ausführungsbeispiel der Erfindung.
Fig. 5 zeigt einen dritten Verfahrensschritt gemäß einem Ausführungsbeispiel der Erfindung.
Fig. 6 zeigt einen Teil einer Flugzeugkabine mit einem Steuerungs- und Kontrollsystem gemäß einem Ausführungsbeispiel der Erfindung.
Fig. 7 zeigt einen weiteren Verfahrensschritt gemäß einem Ausführungsbeispiel der Erfindung.
Fig. 8 zeigt einen weiteren Verfahrensschritt gemäß einem Ausführungsbeispiel der Erfindung.
Fig. 9 zeigt eine Sitzreihe, die entlang den Sitzschienen verschoben werden kann.
Fig. 10 zeigt eine Sitzreihe mit einem Teil des Steuerungs- und Kontrollsystems gemäß einem Ausführungsbeispiel der Erfindung.
Fig. 11 zeigt einen Verfahrensschritt gemäß einem weiteren Ausführungsbeispiel der Erfindung.
Fig. 12 zeigt eine Detaildarstellung eines unteren Bereichs eines Flugzeugsitzes gemäß einem Ausführungsbeispiel der Erfindung.

### Detaillierte Beschreibung von Ausführungsbeispielen

Die Darstellungen in den Figuren sind schematisch und nicht maßstäblich.

In der folgenden Figurenbeschreibung werden für die gleichen oder ähnlichen Elemente die gleichen Bezugsziffern verwendet.

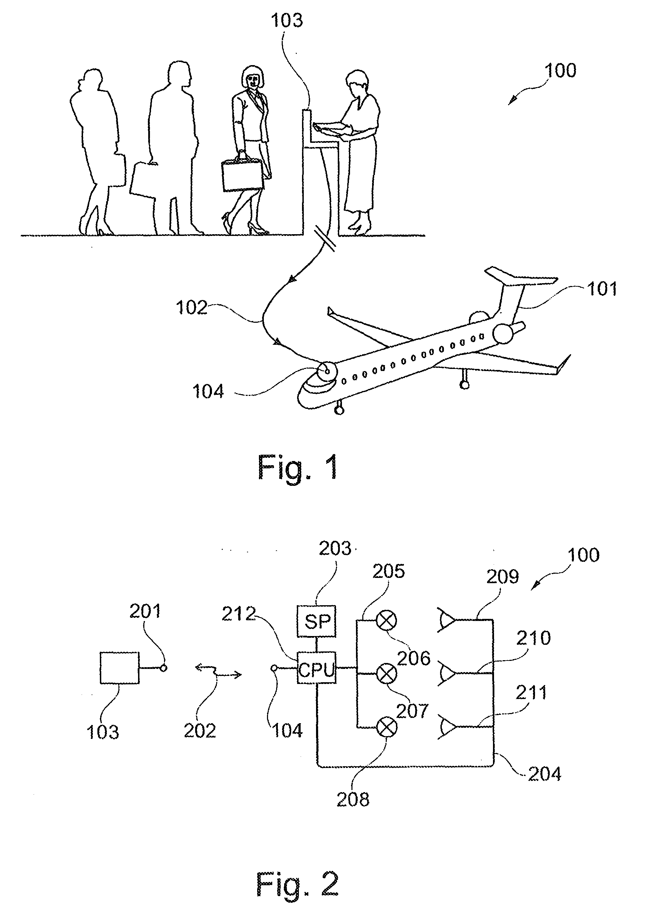

Fig. 1 zeigt ein Steuerungs- und Kontrollsystem 100 gemäß einem Ausführungsbeispiel der Erfindung. Das Steuerungs- und Kontrollsystem 100 weist eine terrestrische Eingabe- bzw. Sendeeinheit 103 auf, die vom Bodenpersonal bedient werden kann. Über diese Einheit 103 wird das entsprechende Kabinenlayout festgelegt, beispielsweise bei der Einbuchung der Passagiere. Über eine Datenleitung 102 wird dann das berechnete gewünschte Kabinenlayout über eine Schnittstelle 104 des Luftfahrzeugs 101 an die Recheneinheit im Flugzeug übermittelt.

Zunächst werden also Layoutveränderungen des bereits im Flugzeug bestehenden Kabinenlayouts identifiziert. Daraufhin, gleichzeitig oder davor erfolgt das Aufladen (Datenupload) der (neuen) Kabinenlayoutinformationen in das Flugzeug 101. Diese Daten werden dann für die schnelle Rekonfiguration weiter verwendet und mehreren Systemen bzw. Vorrichtungen des Steuerungs- und Kontrollsystems zur Verfügung gestellt.

Fig. 2 zeigt eine weitere Darstellung des Steuerungs- und Kontrollsystems 100. Die Datenübertragung zwischen der terrestrischen Eingabe- und Steuereinheit 103 kann auch mit Hilfe einer kabellosen Schnittstelle 201 über eine Funkübertragungsstrecke 202 erfolgen. Die bordinterne Recheneinheit 212 nimmt den Datensatz entgegen, der daraufhin beispielsweise in einem Speicherelement 203 abgelegt wird.

Die Recheneinheit 212 ist einerseits über einen Datenbus 205 an die Ausgabevorrichtungen 206, 207, 208 angeschlossen. Über diese Ausgabevorrichtungen können optische und/oder akustische oder auch haptische oder andere Signale an die Kabinenbesatzung übermittelt werden, um den Besatzungsmitgliedern zu signalisieren, welche Sitze zu welchem Zeitpunkt von welchem Ort an welchen anderen Ort verschoben werden sollen.

Weiterhin ist die Recheneinheit 212 an mehrere Detektionseinheiten 209, 210, 211 angeschlossen (siehe Datenbus 204). Hierbei handelt es sich beispielsweise um optische Sensoren, induktive Sensoren oder auch Linearpositionsgeber oder Navigationssysteme, die beispielsweise eine Satellitennavigationssoftware nutzen, um die Position der entsprechenden Sitze festzustellen.

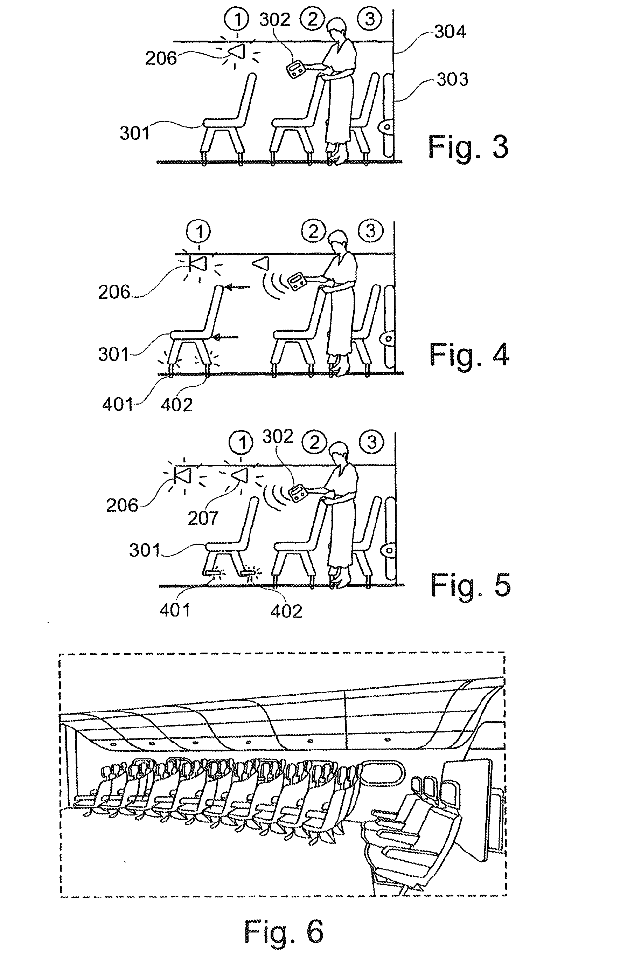

Fig. 3 zeigt einen weiteren Verfahrensschritt. Das Besatzungsmitglied besitzt ein tragbares Steuergerät 302, mit dessen Hilfe beispielsweise die Verriegelungsmechanismen 401, 402 (siehe Fig. 4) der einzelnen Sitze ver- und entriegelt werden können.

Über dem vorderen Sitz 301 leuchtet ein Zeichen 206 auf. Das Zeichen 206 signalisiert dem Besatzungsmitglied, dass der Sitz 301 nach vorne verschoben werden soll. Bei dem Zeichen 206 kann es sich beispielsweise um eine Beleuchtung handeln, die aktiviert wird. Auch kann das Zeichen 206 über einen Projektor, der beispielsweise in einem der Sitze integriert ist, auf die Wandverkleidung projiziert werden.

Wie in Fig. 3 zu sehen, befindet sich an der Wand 304 ein Klappsitz 303, der bei dem in der Fig. 3 bestehenden Kabinenlayout "weggeklappt" ist und nicht verwendet wird.

Die vorzunehmende Arbeitsabfolge wird beispielsweise an einem Display im Versorgungskanal der Passagierkabine und/oder per Projektion an der Seitenwand, z. B. Miniprojektor in der Sitz-Rückenlehne eines der Sitze und/oder am Sitz selber (beispielsweise in Form einer roten oder grünen LED, eines IFE-Bildschirms, etc.), angezeigt.

Wenn der Sitz richtig positioniert ist, erfolgt ein Feedback über die Ausgabevorrichtung 206. Auch kann es sich alternativ oder zusätzlich zu einem optischen Feedback um ein akustisches Feedback in Form eines Signaltons handeln.

Dies ist in Fig. 4 gezeigt. Das Signal 206 zeigt, dass sich der Sitz 201 in der gewünschten, nach vorne verschobenen Position befindet. Daraufhin wird der Sitz wieder an den Sitzschienen arretiert.

Ist dies erfolgt, wird der nächste Arbeitsschritt angezeigt.

Die Anpassung bzw. Änderung des Kabinenlayouts erfolgt beispielsweise in mehreren Schritten. Zunächst muss der zu verschiebende Sitz bzw. die zu verschiebenden Sitze entriegelt werden. Die Entriegelung sowie die nachfolgende Verriegelung erfolgt beispielsweise per Memorymetall-Verriegelungselement. Hierfür kann beispielsweise neben der Memorymetall-Verriegelungsvorrichtung eine entsprechende Energiequelle in Form einer Batterie und ein beispielsweise fernbedienbarer Schalter im Sitz vorgesehen sein. Auch kann der Verriegelungsmechanismus automatisiert zentral, beispielsweise vom Flight Attendant Panel (FAP) aus, durch das Steuerungs- und Kontrollsystem gesteuert werden. In diesem Fall erfolgen Ver- und Entriegelung vollautomatisch (siehe Fig. 4).

Auch kann ein manuelles Entriegelungswerkzeug eingesetzt werden. Ebenso ist es möglich, für jeden Sitz eine Zentralverriegelung vorzusehen. Alternativ kann jeder Sitzfuß lokal entriegelt werden.

Fig. 5 zeigt eine von dem Besatzungsmitglied per Handgerät 302 ferngesteuerte Entriegelung des Sitzes 301. Das Zeichen 207 zeigt, dass der Sitz 301 nach vorne verschoben werden soll. Das Zeichen 206 zeigt an, an welche Position der Sitz 301 zu verschieben ist.

Fig. 6 zeigt einen Teil einer Flugzeugkabine, in welche ein erfindungsgemäßes Steuerungs- und Kontrollsystem eingebaut ist.

Gemäß einem Ausführungsbeispiel der Erfindung kann die Position der Sitze verändert werden, ohne dass die Sitze von den Sitzschienen entfernt werden.

Für die Umkonfiguration der Economyklasse in Businessklasse erfolgt beispielsweise das Entfernen eines oder mehrerer Sitze (vom oder hinten). Dies ist in Fig. 6 gezeigt.

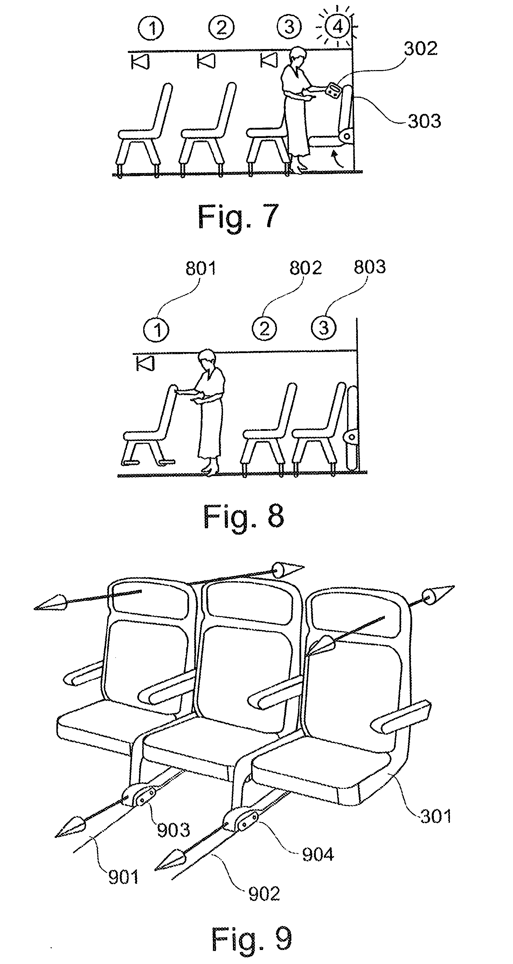

Alternativ kann ein Klappsitz 303 zusammengeschoben werden, um mehr Sitzraum für die restlichen Sitze zu schaffen (siehe Fig. 8).

Fig. 7 zeigt den Klappsitz 303 im auseinandergeklappten, benutzbaren Zustand. Auch diese Klappfunktion kann über die Fernbedienung 302 ferngesteuert werden.

Das Leuchtzeichen 4 in der Fig. 7 zeigt dem Besatzungsmitglied an, dass der Klappsitz nun aufgeklappt werden soll.

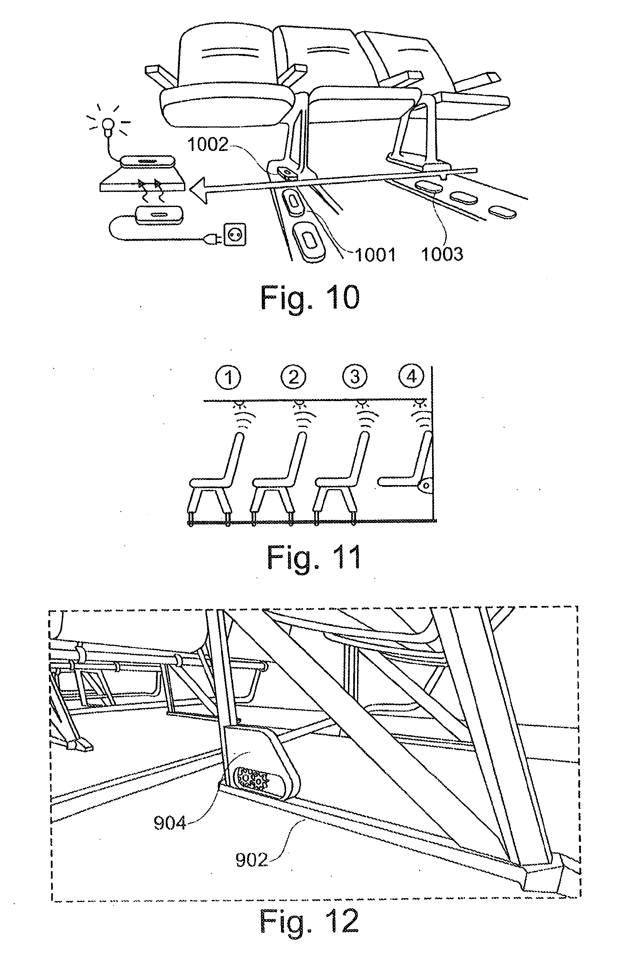

Nach dem Zusammenklappen des Klappsitzes 303 kann der Sitzabstand der restlichen Sitze vergrößert werden. Dies erfolgt entweder manuell durch ein Verschieben durch das Besatzungsmitglied (siehe Fig. 8) oder automatisch, beispielsweise in dem die einzelnen Sitze in eine entsprechende Transportkette eingehängt sind oder eigene Motoren aufweisen, die den Sitz entlang der Sitzschienen verschieben können (ein solcher Motor ist beispielsweise in Fig. 12 dargestellt, siehe Bezugszeichen 904 sowie die entsprechende Sitzschiene 902).

Wie in Fig. 8 zu erkennen, wird dem Besatzungsmitglied angezeigt, dass zuerst der vordere Sitz verschoben werden soll (siehe Bezugszeichen 801). Daraufhin soll der zweite Sitz verschoben werden (siehe Bezugszeichen 802) und daraufhin wird der hintere Sitz noch etwas nach hinten gerückt (siehe Bezugszeichen 803).

In Fig. 9 ist eine Sitzreihe mit drei Sitzen zu sehen, die an den Sitzschienen 901, 902 befestigt sind und über die Antriebe 903, 904 entlang der Sitzschienen gleiten können.

Soll der Sitzabstand verkleinert werden, weil die Kabine beispielsweise von der Business Class-Konfiguration in die Economy Class-Konfiguration umgerüstet werden soll, wird zunächst die vorderste Sitzreihe ein Stück weiter nach vorne geschoben. Daraufhin folgt die nächste Sitzreihe, gefolgt von der nächsten, etc. Als Letztes wird der Klappsitz 303 aufgeklappt.

Ist kein solcher Klappsitz vorhanden, können andere Sitze eingefügt werden.

Aufgrund des verwendeten Sitzschienenprinzips ist das Verschieben unabhängig von baulichen Details der Sitzschiene. Die Sitzbefestigung muss aber baulich zu den entsprechenden Sitzschienen passen. Beispielsweise kann es sich um Linearschienen in der Flugzeugsitzschiene handeln. Auch können klassische Sitzschienen verwendet werden, ggf. mit entsprechenden Beschichtungen zur Verbesserung der Gleiteigenschaft der Sitze entlang der Schienen. Auch können andere geeignete Sitzschienen verwendet werden.

Die Positionsbestimmung der Sitze erfolgt beispielsweise über eine Induktionsversorgung der Sitze. Dies ist in Fig. 10 gezeigt. In den Sitzschienen sind induktive Empfänger 1002 angebracht, um Energie aus den induktiven Quellen 1001, 1003 der Sitzschienen aufzunehmen, so dass die elektrischen Verbraucher der Sitze berührungslos mit Energie versorgt werden können. Dieses Prinzip lässt sich auch zur Detektion der Position der Sitzreihen einsetzen.

Auch können die Positionen der Sitze über Satellitennavigationsempfänger detektiert werden. Hierfür ist nicht zwingend Satellitenempfang erforderlich. Auch kann es sich um ein flugzeuginternes Navigationssystem handeln, welches nicht Satelliten als Referenzpunkte, sondern im Flugzeug fest verbaute Sender verwendet, aber das Prinzip der Satellitennavigation nutzt.

Zusätzlich oder alternativ können Linearpositionsgeber zur Bestimmung der Sitzposition verwendet werden.

Bei jedem Arbeitsschritt werden zum Schluss die Ergebnisse überprüft, insbesondere, ob sich der entsprechende Sitz/die entsprechende Sitzreihe an der richtigen Position befindet und ob die Sitze wieder vorschriftsmäßig verriegelt sind. Diese Prüfung kann vollautomatisiert erfolgen, beispielsweise über eine entsprechende Sensorik. Auch kann diese Überprüfung in Form einer optischen Sichtprüfung durch das Besatzungsmitglied erfolgen. Nach Abschluss der Überprüfung kann das Besatzungsmitglied dann den Arbeitsschritt quittieren, so dass das Steuerungs- und Kontrollsystem den nächsten Arbeitsschritt einleiten kann. Dies ist beispielsweise in Fig. 11 dargestellt.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Teilautomatisiertes Verfahren zur Rekonfiguration eines Kabinenlayouts einer Passagierkabine eines Transportmittels (101), das Verfahren aufweisend die Schritte:
Bereitstellung von elektronischen Daten hinsichtlich eines geplanten Kabinenlayouts an eine Recheneinheit (212) des Transportmittels (101);
Feststellen von Positionen von Sitzen durch Detektionseinheiten;
automatisches Mitteilen eines ersten durchzuführenden Arbeitsschritts der Rekonfiguration an ein Besatzungsmitglied über ein optisches Signal im Bereich eines als nächstes zu verschiebenden Sitzes;
automatisches Bestimmen, ob sich ein entsprechender Sitz in der richtigen Position befindet und vorschriftsmäßig verriegelt ist;
Erzeugen eines Feedbacksignals über eine Ausgabevorrichtung (206) an eine Kabinenbesatzung, wenn sich der Sitz in der richtigen Position befindet;
automatisches Mitteilen eines zweiten durchzuführenden Arbeitsschritts der Rekonfiguration an das Besatzungsmitglied.

2. Verfahren nach Anspruch 1,
wobei die Daten hinsichtlich des geplanten Kabinenlayouts für die Bereitstellung von einem terrestrischen Sender (103) an einen Speicher (203) der Recheneinheit (212) übermittelt werden.

3. Verfahren nach Anspruch 1, oder 2,
wobei das Mitteilen des ersten und des zweiten durchzuführenden Arbeitsschritts zumindest teilweise optisch erfolgt.

4. Verfahren nach Anspruch 3,
wobei es sich bei dem optischen Signal um ein Signal im Bereich eines als nächstes zu verschiebenden Sitzes handelt.

5. Verfahren nach Anspruch 3 oder 4,
wobei es sich bei dem optischen Signal um ein projiziertes Signal von einem Projektor handelt.

6. Verfahren nach einem der vorhergehenden Ansprüche,
wobei der erste Arbeitsschritt ein Verschieben eines Sitzes umfasst;
wobei vor dem Verschieben des Sitzes eine elektrische Entriegelung des Sitzes erfolgt; und
wobei nach dem Verschieben des Sitzes eine elektrische Verriegelung des Sitzes erfolgt.

7. Verfahren nach Anspruch 6,
wobei die Entriegelung und die Verriegelung automatisch erfolgen.

8. Verfahren nach einem der Ansprüche 6 oder 7,
wobei die Entriegelung und die Verriegelung mit Hilfe eines Verriegelungsmechanismus (401, 402) erfolgt, der mit einem Memorymetall-Element von einer Verriegelungsposition in eine Entriegelungsposition bewegt wird.

9. Verfahren nach einem der vorhergehenden Anspruche, weiterhin aufweisend den Schritt:
automatisches Überprüfen, ob der erste Arbeitsschritt fehlerfrei ausgeführt worden ist; und
Übermittlung einer entsprechenden Rückmeldung an das Besatzungsmitglied.

10. Verfahren nach Anspruch 9,
wobei die Rückmeldung ein akustisches Signal umfasst.

11. Verfahren nach einem der vorhergehenden Ansprüche, weiterhin aufweisend den Schritt:
automatische Bestimmung einer Position eines Sitzes während einem Verschieben des Sitzes.

12. Verfahren nach Anspruch 11,
wobei die automatische Bestimmung der Position des Sitzes mit Hilfe einer Induktionsspule erfolgt.

13. Verfahren nach Anspruch 11,
wobei die automatische Bestimmung der Position des Sitzes mit Hilfe eines Navigationssystems erfolgt.

14. Steuerungs- und Kontrollsystem (100) zur zumindest teilweise automatisierten Rekonfiguration eines Kabinenlayouts einer Passagierkabine eines Transportmittels (101), das Steuerungs- und Kontrollsystem (100) aufweisend:
eine Recheneinheit (212) zur Entgegennahme von elektronischen Daten hinsichtlich eines geplanten Kabinenlayouts;
eine Ausgabevorrichtung (206, 207, 208);
Detektionseinheiten zum Feststellen von Positionen von Sitzen;
wobei die Ausgabevorrichtung in Kombination mit der Recheneinheit zum automatischen Mitteilen eines ersten durchzuführenden Arbeitsschritts der Rekonfiguration über ein optisches Signal im Bereich eines als nächstes zu verschiebenden Sitzes an ein Besatzungsmitglied auf Basis des geplanten Kabinenlayouts ausgeführt ist;
wobei das Steuerungs- und Kontrollsystem (100) ausgeführt ist zum automatischen Bestimmen ob sich der Sitz in der richtigen Position befindet und vorschriftsmäßig verriegelt ist, und zum Erzeugen eines Feedbacksignals über die Ausgabevorrichtung (206) an eine Kabinenbesatzung, wenn sich der Sitz in der richtigen Position befindet;
wobei die Ausgabevorrichtung in Kombination mit der Recheneinheit weiterhin zum automatischen Mitteilen eines zweiten durchzuführenden Arbeitsschritts der Rekonfiguration an das Besatzungsmitglied ausgeführt ist, wenn der erste Arbeitsschritt beendet ist.

15. Luftfahrzeug mit einem Steuerungs- und Kontrollsystems nach Anspruch 14.

## Claims

1. A semi-automated method for reconfiguring a cabin layout of a passenger cabin of a means of transport (101), said method comprising the steps of:
making available electronic data with respect to a planned cabin layout to a processing unit (212) of the means of transport (101);
determining positions of seats by means of detection units;
automatically communicating a first work step of the reconfiguration to be carried out to a crew member by means of an optical signal in a region of a seat which is to be displaced next;
automatically determining, whether a seat is in a correct position and locked correctly;
generating a feedback signal to a cabin crew using an output device (206), when the seat is in the correct position;
automatically communicating a second work step of the reconfiguration to be carried out to the crew member.

2. The method of claim 1,
wherein the data with respect to the planned cabin layout is transmitted from a terrestrial transmitter (103) to a memory (203) of the processing unit (212) for being made available.

3. The method of claim 1 or 2,
wherein the communication of the first and the second work step to be carried out is at least partially performed optically.

4. The method of claim 3,
wherein the optical signal is a signal in the region of a seat to be displaced next.

5. The method of claim 3 or 4,
wherein the optical signal is a signal projected by a projector.

6. The method of one of the preceding claims,
wherein the first work step comprises a displacement of a seat;
wherein the seat is electrically unlocked prior to the displacement of the seat; and
wherein the seat is electrically locked subsequent to the displacement of the seat.

7. The method of claim 6,
wherein the unlocking and locking processes take place automatically.

8. The method of one of claims 6 or 7,
wherein the undocking and locking processes are realized with the aid of a locking mechanism (401, 402) that is moved from a locking position into an unlocking position by means of a memory metal element.

9. The method of one of the preceding claims, furthermore comprising the steps of:
automatically checking whether the first work step was correctly carried out; and
transmitting a corresponding feedback to the crew member.

10. The method of claim 9,
wherein the feedback comprises an acoustic signal.

11. The method of one of the preceding claims, furthermore comprising the step of:
automatically determining a position of a seat during a displacement of the seat.

12. The method of claim 11,
wherein the automatic determination of the position of the seat is realized with the aid of an induction coil.

13. The method of claim 11,
wherein the automatic determination of the position of the seat is realized with the aid of a navigation system.

14. A control and monitoring system (100) for reconfiguring a cabin layout of a passenger cabin of a means of transport (101) in an at least partially automated fashion, with the management and control system (100) comprising:
a processing unit (212) for receiving electronic data with respect to a planned cabin layout;
an output device (206, 207, 208);
detection units for determining positions of seats;
wherein output device and the processing unit are designed for automatically communicating a first work step of the reconfiguration to be carried out by means of an optical signal in a region of a seat which is to be displaced next, on the basis of the planned cabin layout, to a crew member processing;
wherein the control and monitoring system (100) is adapted for automatically determining, whether a seat is in a correct position and locked correctly, and for generating a feedback signal to a cabin crew using an output device (206), when the seat is in the correct position.
wherein the output device and the processing unit are furthermore designed for automatically communicating a second work step of the reconfiguration to be carried out to the crew member once the first work step is completed.

15. An aircraft with a control and monitoring system of claim 14.

## Revendications

1. Procédé partiellement automatisé pour la reconfiguration d'un agencement de cabine d'une cabine de passagers d'un moyen de transport (101), le procédé comprenant les étapes de :
- mise à disposition de données électroniques concernant un agencement de cabine prévu à une unité de calcul (212) du moyen de transport (101) ;
- détermination de positions de sièges par des unités de détection ;
- communication automatique d'une première étape de travail de reconfiguration à réaliser à un membre d'équipage par l'intermédiaire d'un signal visuel dans la zone d'un siège devant être ensuite déplacé ;
- détermination automatique indiquant si un siège correspondant se trouve dans la position correcte et est verrouillé conformément aux prescriptions ;
- production d'un signal de rétroaction par l'intermédiaire d'un dispositif de sortie (206) à un équipage de cabine quand le siège se trouve en position correcte ;
- communication automatique d'une seconde étape de travail de reconfiguration à réaliser au membre d'équipage.

2. Procédé selon la revendication 1, les données concernant l'agencement de cabine prévu étant transmises pour la mise à disposition d'un capteur terrestre (103) à une mémoire (203) de l'unité de calcul (212).

3. Procédé selon la revendication 1 ou 2, la communication de la première et de la seconde étape de travail à réaliser ayant lieu visuellement au moins partiellement.

4. Procédé selon la revendication 3, s'agissant pour le signal visuel d'un signal dans la zone d'un siège devant être ensuite déplacé.

5. Procédé selon la revendication 3 ou 4, s'agissant pour le signal visuel d'un signal projeté par un projecteur.

6. Procédé selon l'une des revendications précédentes,
la première étape de travail comprenant un déplacement d'un siège ;
un déverrouillage électrique du siège ayant lieu avant le déplacement du siège ; et
un verrouillage électrique du siège ayant lieu après le déplacement du siège.

7. Procédé selon la revendication 6, le déverrouillage et le verrouillage s'effectuant automatiquement.

8. Procédé selon l'une des revendications 6 ou 7, le déverrouillage et le verrouillage s'effectuant à l'aide d'un mécanisme de verrouillage (401, 402), qui est déplacé avec un élément en métal à mémoire de forme d'une position de verrouillage à une position de déverrouillage.

9. Procédé selon l'une des revendications précédentes, présentant en outre l'étape de :
- contrôle automatique pour vérifier si la première étape de travail a été réalisée sans erreur ; et
- transmission au membre d'équipage d'une information en retour correspondante.

10. Procédé selon la revendication 9, l'information en retour comprenant un signal sonore.

11. Procédé selon l'une des revendications précédentes, présentant en outre l'étape de :
- détermination automatique d'une position d'un siège pendant un déplacement du siège.

12. Procédé selon la revendication 11, la détermination automatique de la position du siège s'effectuant à l'aide d'une bobine d'induction.

13. Procédé selon la revendication 11, la détermination automatique de la position du siège s'effectuant à l'aide d'un système de navigation.

14. Système de commande et de contrôle (100) pour la reconfiguration au moins partiellement automatisée d'un agencement de cabine d'une cabine de passagers d'un moyen de transport (101), le système de commande et de contrôle (100) présentant :
- une unité de calcul (212) pour réceptionner des données électroniques concernant un agencement de cabine prévu ;
- un dispositif de sortie (206, 207, 208) ;
- des unités de détection pour déterminer les positions de sièges ;
le dispositif de sortie étant réalisé en combination avec l'unité de calcul pour la communication automatique, à un membre d'équipage, d'une première étape de reconfiguration à réaliser par l'intermédiaire d'un signal visuel au niveau d'un siège devant être ensuite déplacé sur la base de l'agencement de cabine prévu ;
le système de commande et de contrôle (100) étant réalisé pour déterminer automatiquement si le siège se trouve dans la position correcte et est verrouillé conformément aux prescriptions, et pour la production d'un signal de rétroaction par l'intermédiaire du dispositif de sortie (206) à un équipage de cabine lorsque le siège se trouve en position correcte ;
le dispositif de sortie, combiné à l'unité de calcul, étant en outre effectué pour la communication automatique d'une seconde étape de travail de reconfiguration à réaliser au membre d'équipage lorsque la première étape de travail est terminée.

15. Aéronef avec un système de commande et de contrôle selon la revendication 14.
